(19) Europäisches Patentamt
European Patent Office
Office européen des brevets

(11) Publication number: **0 176 039 B1**

(12) **EUROPEAN PATENT SPECIFICATION**

(45) Date of publication of patent specification: **05.06.91**

(51) Int. Cl.⁵: **C09K 19/44**, C09K 19/42

(21) Application number: **85111875.2**

(22) Date of filing: **19.09.85**

# (54) Liquid crystal composition.

(30) Priority: **25.09.84 JP 200090/84**

(43) Date of publication of application:
**02.04.86 Bulletin 86/14**

(45) Publication of the grant of the patent:
**05.06.91 Bulletin 91/23**

(84) Designated Contracting States:
**CH DE GB LI**

(56) References cited:
**EP-A- 0 060 646**
**EP-A- 0 149 209**
**EP-A- 0 168 012**
**DE-A- 3 337 316**

(73) Proprietor: **CASIO COMPUTER COMPANY LIMITED**
**6-1, 2-chome, Nishi-Shinjuku**
**Shinjuku-ku Tokyo(JP)**

(72) Inventor: **Shinoda, Isamu**
**8-415 Yokokawamachi-Jutaku 108 Yokokawamachi**
**Hachioji-shi Tokyo(JP)**

(74) Representative: **Strasse, Joachim, Dipl.-Ing. et al**
**Eisenführ, Speiser & Strasse Zweibrückenstrasse 17**
**W-8000 München 2(DE)**

**EP 0 176 039 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a liquid crystal composition, and, more particularly, to a liquid crystal composition for use in a twisted nematic effect type (TN type) liquid crystal device which is time-divisionally driven at a high degree.

The use of liquid crystal devices in TV sets, computer terminals and OA equipment is becoming more popular. As liquid crystal devices used in such equipment, devices of a matrix display type, displaying a number of pixels in rows and columns, are frequently used. In order to increase the display capacity, a number of pixels must be time-divisionally driven, and, more specifically, time-divisionally driven at a high degree. A TN-type liquid crystal device to be thus time-divisionally driven must have a fast response time and a high contrast.

As a conventional liquid crystal composition for use in a TN-type liquid crystal device, one for a compact device is known. This composition contains, as a main component, a liquid crystal compound of the type wherein a substituted cyclohexane ring is bonded by esterification with either a substituted benzene ring or a substituted cyclohexane ring. This composition contains, in addition, an Np-type ($\Delta\epsilon > 0$) liquid crystal compound.

The response time of a liquid crystal can be represented by the time Tr required for a transmittance to change from 90% to 10% (rise time), and a time Td required for the transmittance to change from 10% to 90% (fall time). The rise and decay times Tr and Td of a liquid crystal are proportional to its viscosity. The rise time Tr depends on the electric field intensity and the decay time Td depends on the thickness of a liquid crystal layer.

In order to reduce the response time of the liquid crystal device, a liquid crystal having a low viscosity and a large dielectric anisotropy must be used, and a thin liquid crystal layer must be formed.

The contrast of a liquid crystal device depends on the gamma characteristics given by V90%/V10%, where V90% is a voltage at which the transmittance of the liquid crystal is 90%, and V10% is a voltage at which the transmittance of the liquid crystal is 10%. According to a report by M. Schadt et al., (Z. Naturforsch., 37a, 165 (1982) and Proceedings of the SID 23(1), 29 (1982)), if a voltage corresponding to a liquid crystal transmittance of 50% is represented as V50% when a value P given by (V50% - V90%)V90% is minimum, optimal time-divisional characteristics, steep gamma characteristics, and a high contrast are obtained.

The value P is given by:

$$P = 0.1330 + 0.0266(K13/K11 - 1) + 0.0443[\ell n(\Delta \cdot n(\Delta n \cdot d/2\lambda)]^2,$$

where

$\Delta n = n11 - n\perp$: optical anisotropy

K33: bending elastic constant

K11: splay elastic constant.

When the third term of the right side is 0, the value P is minimum. If the wavelength 500 nm, at substantially the center of the visible light spectrum, is represented as $\lambda$ when the following equation is satisfied:

$$\Delta n \cdot d\ (\mu m) = 1,$$

the value P is minimum and the gamma characteristics become steepest.

However, since such a conventional liquid crystal composition has a low value of $\Delta n$, if the equation $\Delta n \cdot d = 1$ is satisfied to obtain steep gamma characteristics, the thickness d of the liquid crystal layer must be increased. When the thickness d is increased, the decay time Td is increased and the intensity of an electric field applied to the liquid crystal layer is reduced. Therefore, the rise time Tr is also increased. In view of this, the application of a high drive voltage may be proposed in order to perform high-speed operation. However, an optimal drive voltage for driving the liquid crystal within a transmittance range of 50 % to 90 % by time-divisional drive is fixed. For this reason, when the drive voltage is increased, the liquid crystal cannot be controlled within the above-mentioned transmittance range. Consequently, a fast response time cannot be obtained by increasing the drive voltage. In contrast to this, when the thickness d of the liquid crystal layer is reduced in order to obtain a fast response time, the condition $\Delta n \cdot d = 1$ is not satisfied, so that the gamma characteristics become moderate and a high contrast cannot be obtained. In addition, the above-mentioned liquid crystal composition contains a main component having a slow response time and a low contrast.

In this manner, a liquid crystal device using a conventional liquid crystal composition has a poor response time characteristic and a low contrast.

DE-A1 33 37 316 discloses a liquid crystal composition for a projector apparatus. This known liquid crystal composition can comprise compounds covered by general formulas I, II, VIII and further VII and or IV as defined in the present specification. This citation does not disclose mixtures containing compounds as represented by general formula VI.

While this citation is generally silent on the specific mixing ratios, it does teach to use very small amounts of compounds according to general formula VII, and to use these only in special cases. Amounts of less than 20 % by weight should be used, since otherwise the temperature range of the liquid crystal material is impaired.

On the other hand, this known liquid crystal composition has as much as 70 % by weight or more of compounds according to general formulas I and II.

While this composition would certainly provide a large value of Δn, melting point and clearing point would be low and especially, the composition would have a high viscosity. A low viscosity is highly advantageous, since it leads to a high response speed.

The prior art composition fails to provide large Δn values and low viscosities at the same time and discourages using high amounts of compounds according to general formula VII, which are necessary for obtaining low viscosity values.

It is the object of the present invention to provide a liquid crystal composition which has a fast response time and a high contrast, and which can be suitably used in a TN-type liquid crystal device which is time-divisionally driven at a high degree. In order to achieve the above object of the present invention, there is provided a liquid crystal composition, constituted of:

A first liquid crystal material containing at least two liquid crystal compounds selected from the group consisting of the compounds represented by general formulas:

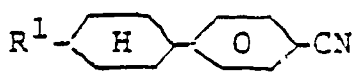 ... (I)

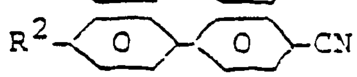 ... (II)

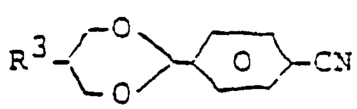 ... (III)

wherein each of $R^1$, $R^2$, and $R^3$ is independently a normal alkyl group having 2 to 7 carbon atoms; a second liquid crystal material containing at least one liquid crystal compound selected from the group consisting of the compounds represented by general formulas:

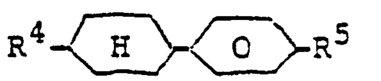 ... (IV)

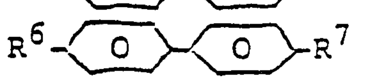 ... (V)

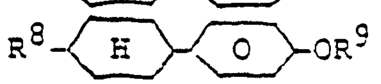 ... (VI)

wherein each of $R^4$, $R^5$, $R^6$, $R^7$, $R^8$ and $R^9$ is independently a normal alkyl group having 1 to 5 carbon atoms; and a third liquid crystal material containing at least one liquid crystal compound represented by general formula:

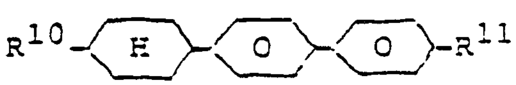 ... (VII)

wherein each of $R^{10}$ and $R^{11}$ is independently a normal alkyl group having 1 to 5 carbon atoms, and at least one liquid crystal compound selected from the group consisting of the compounds represented by general

formulas:

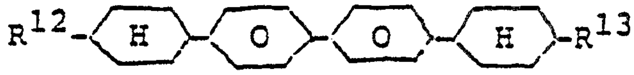 ... (VIII)

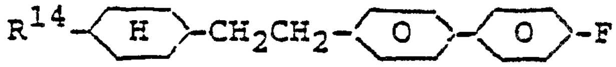 ... (IX)

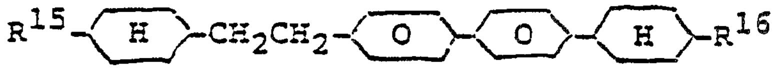 ... (X)

wherein each of $R^{12}$, $R^{13}$, $R^{14}$, $R^{15}$ and $R^{16}$ is independently a normal alkyl group having 1 to 5 carbon atoms; wherein said first liquid crystal material is mixed in an amount of 30 wt % to 51 wt %, said second liquid crystal material is mixed in an amount of 20 wt % to 40 wt %, the compound of general formula (VII) included in said third liquid crystal material is mixed in an amount of 15 wt % to 30 wt % based on total amount of the composition, and the compounds of general formulas (VIII), (IX) and (X) included in said third liquid crystal material are mixed in a total amount of 4 to 17 wt % based on total amount of the composition.

It was found that in order to achieve the above object, the liquid crystal composition must be an Np-type ($\Delta\epsilon > 0$) nematic liquid crystal having a low viscosity and a large $\Delta n$. In order to provide such a liquid crystal composition, the present inventors made extensive studies from which they found that the desired effect can be obtained by mixing three specific types of liquid crystal material, as described subsequently. More specifically, the liquid crystal composition of the present invention contains a liquid crystal compound which serves mainly for imparting Np-type liquid crystal characteristics, has a large $\Delta\epsilon$ (e.g. 10 to 30), a low viscosity and a large $\Delta n$. This type of liquid crystal compound is selected from liquid crystal compounds represented by general formulas:

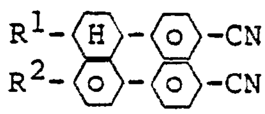 ...(I)

...(II)

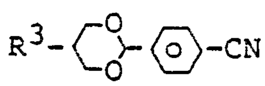 ...(III)

(wherein each of $R^1$, $R^2$ and $R^3$ is independently a normal alkyl group having 2 to 7 carbon atoms). These liquid crystal compounds can be used in an admixture of two or more, the resultant liquid crystal material being referred to as a first liquid crystal material. The first liquid crystal material contains, preferably, compounds of general formulas (I) and (II). Additionally, the liquid crystal composition of the present invention contains a liquid crystal compound which serves primarily in reducing the response time, which has a low viscosity and a small $|\Delta\epsilon|$ (e.g., $|\Delta\epsilon| \leq 0.5$, and whose gamma characteristics become steep when the ratio $\Delta\epsilon/\epsilon\perp$ is small.). This type of liquid crystal compound is selected from liquid crystal compounds represented by general formulas:

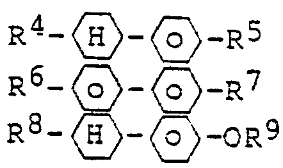 ...(IV)

...(V)

...(VI)

(wherein each of $R^4$, $R^5$, $R^6$, $R^7$, $R^8$ and $R^9$ is independently a normal alkyl group having 1 to 5 carbon atoms). These compounds can be used singly or in an admixture of two or more, the resultant liquid crystal material being referred to as a second liquid crystal material. The second liquid crystal material contains, preferably, a compound of general formula (IV). The liquid crystal composition of the present invention further contains a liquid crystal compound which serves mainly to impart steeper gamma characteristics (i.e., higher contrast) and to increase the nematic-isotropic phase transition (N-I) point, and which has a large $\Delta n$. (e.g., $\Delta n \geqq 0.18$), a high N-I point, and a low viscosity. This type of liquid crystal compound is selected from liquid crystal compounds represented by general formulas:

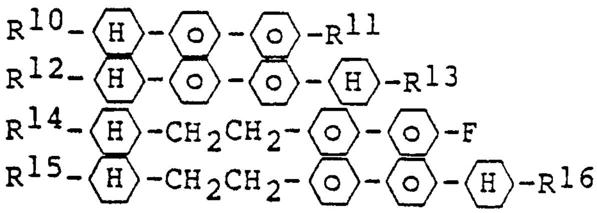

...(VII)
...(VIII)
...(IX)
...(X)

(wherein each of $R^{10}$, $R^{11}$, $R^{12}$, $R^{13}$, $R^{14}$, $R^{15}$ and $R^{16}$ is independently a normal alkyl group having 1 to 5 carbon atoms). This liquid crystal material will be referred to as a third liquid crystal material. The third liquid crystal material contains a compound of general formula (VII) and at least one compound of general formulas (VIII), (IX) and (X). The three liquid crystal materials described above are mixed in a mixing ratio such that the resultant composition has a positive $\Delta\epsilon$. More specifically, based on the total weight of the composition, the first liquid crystal material is contained in an amount of 30 to 51 % by weight, the second liquid crystal material is contained in an amount of 20 to 40 % by weight, the compound of general formula (VII) is included in the third material in an amount of 15 to 30 % by weight and the compound of general formula (VIII, IX) or (X) is included in the third material in a total amount of 4 to 17 % by weight, all based on total amount of composition.

Provided the above requirements are met, the following conditions will preferably, be satisfied: the composition will contain up to 25 % by weight of a liquid crystal compound represented by general formula (I), up to 26 % by weight of a compound represented by general formula (II), up to 5 % by weight of a compound represented by general formula (III), up to 20 % by weight of a compound represented by general formula (IV), up to 5 % by weight of a compound represented by general formula (V), up to 28 % by weight of a compound represented by general formula (VI), up to 30 % by weight of a compound represented by general formula (VII), up to 5 % by weight of a compound represented by general formula (VIII), up to 5 % by weight of a compound represented by general formula (IX), and up to 12 % by weight of a compound represented by general formula (X). The compounds to be used in the liquid crystal composition of the present invention are themselves known. The present invention will now be described by way of its examples.

Examples 1 - 4, and Comparative examples 1 - 4.

Liquid crystal compounds shown in Table 1 were mixed in the mixing ratios (parts by weight) shown therein to prepare the 4 types of liquid crystal compositions of the present invention. The properties/characteristics of the respective liquid crystal compositions are also shown in Table 1. For the purpose of comparison, mixing ratios and properties/characteristics of 4 conventional liquid crystal compositions are shown in Table 2.

Table 1 (Present Invention)

| Liquid Crystal Compound | | | Example (Parts By Weight) | | | |
|---|---|---|---|---|---|---|
| Liquid Crystal Material No. | Formula No. | Compound | 1 | 2 | 3 | 4 |
| 1 | (I) | 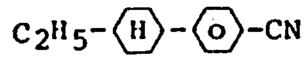 | 5 | – | – | 5 |
| | (I) | 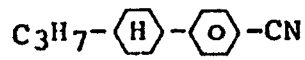 | 12 | 17 | 20 | 20 |
| | (II) | 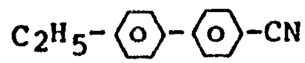 | 5 | 9 | 9 | 9 |
| | (II) | 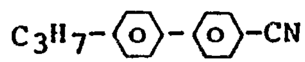 | – | – | – | – |
| | (II) | 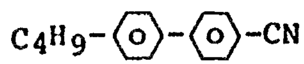 | – | – | 7 | 5 |
| | (II) | 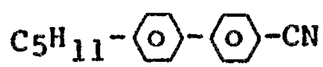 | 8 | 17 | 10 | 12 |
| | (III) | 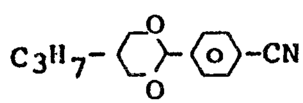 | – | 5 | – | – |
| 2 | (IV) | 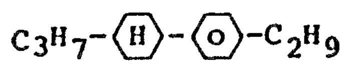 | 12 | 10 | – | 10 |
| | (IV) | 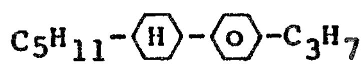 | – | – | 20 | – |
| | (V) | 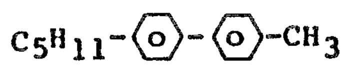 | – | – | – | 5 |
| | (VI) | 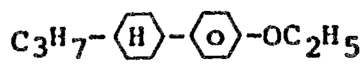 | 10 | 10 | – | 5 |
| | (VI) | 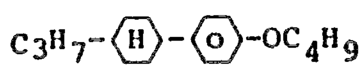 | 18 | – | – | – |

(to be continued)

| Liquid Crystal Compound | | | Example (Parts By Weight) | | | |
|---|---|---|---|---|---|---|
| Liquid Crystal Material No. | Formula No. | Compound | 1 | 2 | 3 | 4 |
| 3 | (VII) | 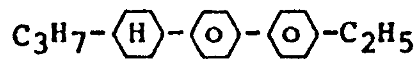 | 8 | 5 | 22 | 13 |
| | (VII) | 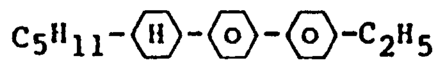 | 17 | 10 | 8 | 10 |
| | (VIII) | 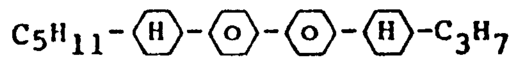 | 5 | - | 4 | - |
| | (IX) | 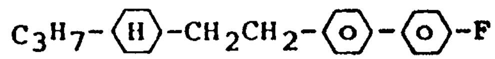 | - | 5 | - | - |
| | (X) | 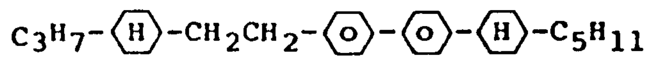 | - | 12 | - | 6 |
| Characteristics | Physical Properties | S-N Point (°C) | <0 | <0 | <0 | <0 |
| | | N-I Point (°C) | 61 | 72 | 61 | 61 |
| | | Viscosity (20°C) (cps) | 16 | 19 | 18 | 19 |
| | | Δn (25°C) | 0.127 | 0.149 | 0.149 | 0.148 |
| | Electro-optical Characteristics | d satisfying Δn·d = 1 (μm) | 7.9 | 6.7 | 6.7 | 6.8 |
| | | Vop (25°C, 1/64 duty, 1/9 bias) (V) | 13.5 | 11.8 | 11.9 | 11.6 |
| | | Tr (msec) | 70 | 60 | 50 | 70 |
| | | td (msec) | 90 | 60 | 60 | 60 |
| | | Contrast | 3.2 | 3.2 | 3.2 | 3.2 |

Table 2 (Prior Art)

| Liquid Crystal Compound | 1 | 2 | 3 | 4 |
|---|---|---|---|---|
| 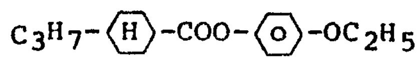 | 14 | - | 12 | 12 |
| 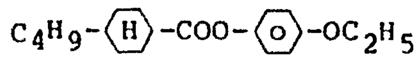 | 14 | 14 | 12 | 12 |
| 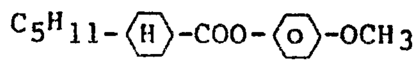 | 14 | 14 | 12 | 12 |
| 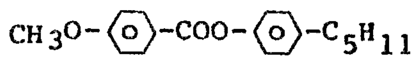 | 14 | 14 | 12 | 12 |
| 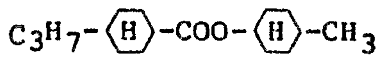 | 14 | 14 | 12 | 12 |
| 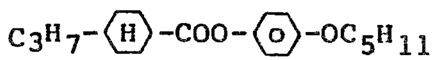 | - | 14 | - | - |
| 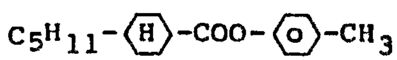 | - | - | 10 | - |
| 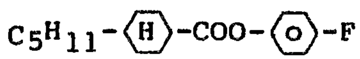 | - | - | - | 10 |
| 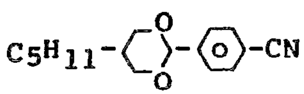 | 30 | - | - | - |
| 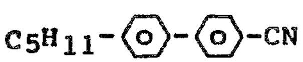 | - | 30 | - | - |
| 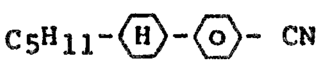 | - | - | 30 | 30 |

| | | 1 | 2 | 3 | 4 |
|---|---|---|---|---|---|
| Physical Properties | C-N Point | < 0°C | < 0°C | < 0°C | < 0°C |
| | N-I Point | 54°C | 49°C | 55°C | 52°C |
| | Viscosity (20°C) (cps) | 26 | 21 | 17 | 18 |
| | Δn (25°C) | 0.107 | 0.124 | 0.103 | 0.100 |
| | d satisfying Δn•d = 1 (μm) | 9.3 | 8.1 | 9.7 | 10.0 |
| Electro-optical Characteristics | Vop (25°C, 1/64 duty, 1/9 bias) | 10.6 | 11.7 | 12.3 | 12.5 |
| | Tr (msec) | 200 | 130 | 160 | 160 |
| | Td (msec) | 190 | 140 | 170 | 170 |
| | Contrast | 3.0 | 3.1 | 3.0 | 3.0 |

As described above, the liquid crystal composition of the present invention consists mainly of a liquid crystal material of a type wherein a cyclohexane ring is directly bonded with a benzene ring. Therefore, the composition of the present invention has a low viscosity and a large Δn. Even when the condition Δ n•d = 1 is satisfied, the thickness d of the liquid crystal layer is not increased; thus a fast response time is obtained. Furthermore, even if the thickness d of the liquid crystal layer is reduced, the condition Δ n•d = 1 can be satisfied so that steep gamma characteristics and a high contrast can be obtained. The liquid crystal composition of the present invention can be used by sealing it between a pair of substrates of a matrix liquid crystal display device comprising at least one transparent substrate, scanning electrodes (common electrodes) and signal electrodes, (segment electrodes) being formed on the substrates. The respective electrodes are driven by a time-divisional drive circuit.

## Claims

1. A liquid crystal composition having positive dielectric anisotropy, constituted of: a first liquid crystal material containing at least two liquid crystal compounds selected from the group consisting of the compounds represented by general formulas:

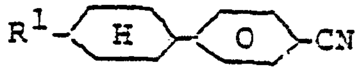 ... (I)

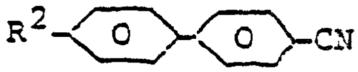 ... (II)

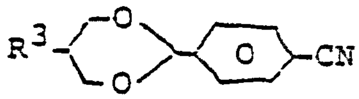 ... (III)

wherein each of $R^1$, $R^2$, and $R^3$ is independently a normal alkyl group having 2 to 7 carbon atoms; a second liquid crystal material containing at least one liquid crystal compound selected from the group consisting of the compounds represented by general formulas:

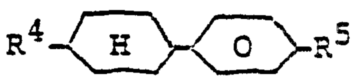 ... (IV)

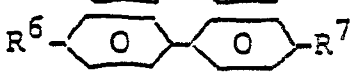 ... (V)

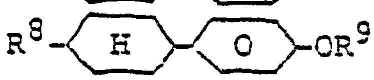 ... (VI)

wherein each of $R^4$, $R^5$, $R^6$, $R^7$, $R^8$ and $R^9$ is independently a normal alkyl group having 1 to 5 carbon atoms; and a third liquid crystal material containing at least one liquid crystal compound represented by general formula:

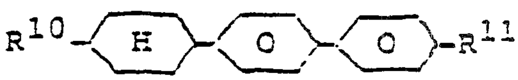 ... (VII)

wherein each of $R^{10}$ and $R^{11}$ is independently a normal alkyl group having 1 to 5 carbon atoms, and at least one liquid crystal compound selected from the group consisting of the compounds represented by general formulas:

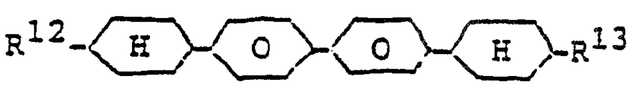 ... (VIII)

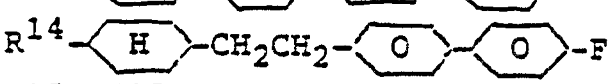 ... (IX)

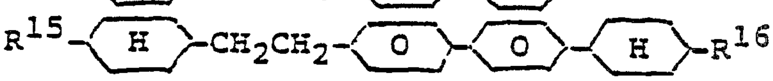 ... (X)

wherein each of $R^{12}$, $R^{13}$, $R^{14}$, $R^{15}$ and $R^{16}$ is independently a normal alkyl group having 1 to 5 carbon atoms; wherein said first liquid crystal material is mixed in an amount of 30 wt % to 51 wt %, said second liquid crystal material is mixed in an amount of 20 to 40 wt%, the compound of general formula (VII) included in said third liquid crystal material is mixed in an amount of 15 to 30 wt % based on total

amount of the composition, and the compounds of general formulas (VIII), (IX) and (X) included in said third liquid crystal material are mixed in a total amount of 4 to 17 wt % based on the total amount of the composition.

2. A composition according to claim 1, characterized in that said first liquid crystal material contains compounds represented by general formulas (I) and (II), said second liquid crystal material contains compounds represented by general formulas (IV) and (VI), and said third liquid crystal material contains compounds represented by general formulas (VII) and (VIII).

3. A composition according to claim 1, characterized in that said first liquid crystal material contains compounds represented by general formulas (I) and (II), said second liquid crystal material contains a compound represented by general formula (IV), and said third liquid crystal material contains compounds represented by general formulas (VII and (VIII).

4. A composition according to claim 3, characterized in that the composition contains up to 25 % by weight of the compound of general formula (I), up to 26 % by weight of the compound of formula (II), up to 20 % by weight of the compound of general formula (IV), up to 30 % by weight of the compound of general formula (VII) and up to 5 % by weight of the compound of general formula (VIII).

5. A composition according to claim 1, characterized in that the composition contains up to 25 % by weight of a liquid crystal compound represented by general formula (I), up to 26 % by weight of a compound represented by general formula (II), up to 5 % by weight of a compound represented by general formula (III), up to 20 % by weight of a compound represented by general formula (IV), up to 5 % by weight of a compound represented by general formula (V), up to 28 % by weight of a compound represented by general formula (VI), up to 30 % by weight of a compound represented by general formula (VII), up to 5 % by weight of a compound represented by general formula (VIII), up to 5 % by weight of a compound represented by general formula (IX), and up to 12 % by weight of a compound represented by general formula (X).

## Revendications

1. Composition de cristal liquide ayant une anisotropie diélectrique positive, constituée par:
une première matière de cristal liquide contenant au moins deux composés de cristal liquide choisis dans le groupe constitué par les composés représentés par les formules générales:

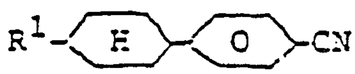
... (I)

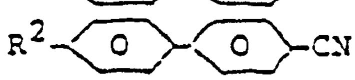
... (II)

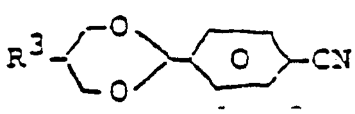
... (III)

dans lesquelles $R^1$, $R^2$ et $R^3$ représentent chacun indépendamment un groupe alkyle normal ayant 2 à 7 atomes de carbone;
une deuxième matière de cristal liquide contenant au moins un composé de cristal liquide choisi dans le groupe constitué par les composés représentés par les formules générales:

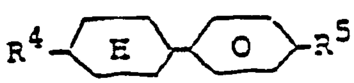
... (IV)

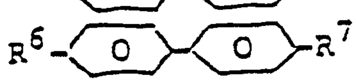
... (V)

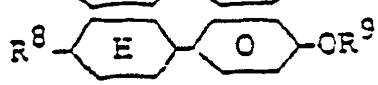
... (VI)

dans lesquelles $R^4$, $R^5$, $R^6$, $R^7$, $R^8$ et $R^9$ représentent chacun indépendamment un groupe alkyle normal ayant 1 à 5 atomes de carbone; et
une troisième matière de cristal liquide contenant au moins un composé de cristal liquide représenté par la formule générale:

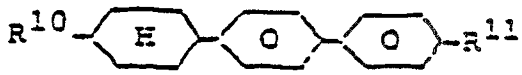

... (VII)

dans laquelle $R^{10}$ et $R^{11}$ représentent chacun indépendamment un groupe alkyle normal ayant 1 à 5 atomes de carbone; et
au moins un composé de cristal liquide choisi dans le groupe constitué par les composés représentés par les formules générales:

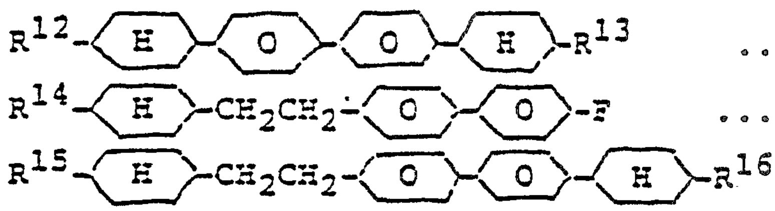

... (VIII)

... (IX)

... (X)

dans lesquelles $R^{12}$, $R^{13}$, $R^{14}$, $R^{15}$ et $R^{16}$ représentent chacun indépendamment un groupe alkyle normal ayant 1 à 5 atomes de carbone;
dans laquelle ladite première matière de cristal liquide est incorporée dans une quantité de 30% en poids à 51% en poids, ladite deuxième matière de cristal liquide est incorporée dans une quantité de 20 à 40% en poids, le composé de formule générale (VII) inclus dans ladite troisième matière de cristal liquide est incorporé dans une quantité de 15 à 30% en poids, sur la base de la quantité totale de la composition, et les composés des formules générales (VIII), (IX) et (X) inclus dans ladite troisième matière de cristal liquide sont incorporés dans une quantité totale de 4 à 17% en poids, sur la base de la quantité totale de la composition.

2. Composition selon la revendication 1,
caractérisée par le fait que ladite première matière de cristal liquide contient des composés représentés par les formules générales (I) et (II), ladite deuxième matière de cristal liquide contient des composés représentés par les formules générales (IV) et (VI), et ladite troisième matière de cristal liquide contient des composés représentés par les formules générales (VII) et (VIII).

3. Composition selon la revendication 1,
caractérisée par le fait que ladite première matière de cristal liquide contient des composés représentés par les formules générales (I) et (II), ladite deuxième matière de cristal liquide contient un composé représenté par la formule générale (IV), et ladite troisième matière de cristal liquide contient des composés représentés par les formules générales (VII) et (VIII).

4. Composition selon la revendication 3,
caractérisée par le fait que la composition contient jusqu'à 25% en poids du composé de formula générale (I), jusqu'à 26% en poids du composé de formula générale (II), jusqu'à 20% en poids du composé de formula générale (IV), jusqu'à 30% en poids du composé de formula générale (VII), et jusqu'à 5% en poids du composé de formula générale (VIII).

5. Composition selon la revendication 1,
caractérisée par la fait que la composition contient jusqu'à 25% en poids d'un composé de cristal liquide représenté par la formule générale (I), jusqu'à 26% en poids d'un composé représenté par la formule générale (II), jusqu'à 5% en poids d'un composé représenté par la formule générale (III), jusqu'à 20% en poids d'un composé représenté par la formule générale (IV), jusqu'à 5% en poids d'un composé représenté par la formule générale (V), jusqu'à 28% en poids d'un composé représenté par la

formule générale (VI), jusqu'à 30% en poids d'un composé représenté par la formule générale (VII), jusqu'à 5% en poids d'un composé représenté par la formule générale (VIII), jusqu'à 5% en poids d'un composé représenté par la formule générale (IX), et jusqu'à 12% en poids d'un composé représenté par la formule générale (X).

**Ansprüche**

1. Flüssigkristallzusammensetzung mit positiver dielektrischer Anisotropie, bestehend aus:
einem ersten Flüssigkristallstoff, der mindestens zwei Flüssigkristallkomponenten enthält, die ausgewählt sind aus der Gruppe, bestehend aus Komponenten, die repräsentiert sind durch allgemeine Formeln:

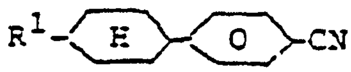 ... (I)

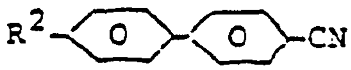 ... (II)

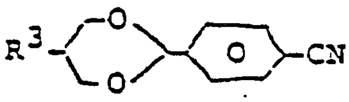 ... (III)

wobei jedes der $R^1$, $R^2$ und $R^3$ unabhängig eine normale Alkyl-Gruppe mit 2 bis 7 Kohlenstoffatomen ist;
einem zweiten Flüssigkristallstoff, der mindestens eine Flüssigkristallkomponente enthält, die ausgewählt ist aus der Gruppe, bestehend aus den Komponenten, die repräsentiert sind durch allgemeine Formeln:

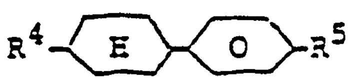 ... (IV)

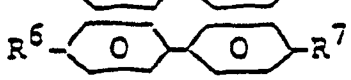 ... (V)

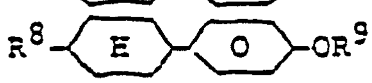 ... (VI)

wobei jedes der $R^4$, $R^5$, $R^6$, $R^7$, $R^8$ und $R^9$ unabhängig eine normale Alkyl-Gruppe mit 1 bis 5 Kohlenstoffatomen ist; und
einem dritten Flüssigkristallstoff, der mindestens eine Flüssigkristallkomponente enthält, die repräsentiert ist durch die allgemeine Formel

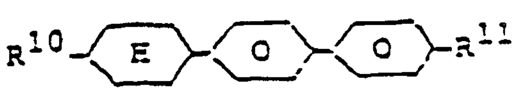 ... (VII)

wobei jedes der $R^{10}$ und $R^{11}$ unabhängig eine normale Alkyl-Gruppe mit 1 bis 5 Kohlenstoffatomen ist, und
mindestens einer Flussigkristallkomponente, die ausgewählt ist aus der Gruppe, bestehend aus den Komponenten, die repräsentiert sind durch allgemeine Formeln:

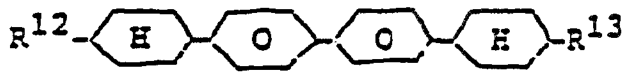 ... (VIII)

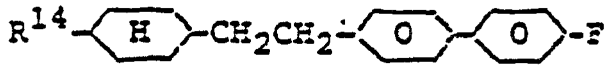 ... (IX)

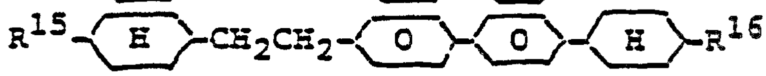 ... (X)

wobei jedes der $R^{12}$, $R^{13}$, $R^{14}$, $R^{15}$ und $R^{16}$ unabhängig eine normale Alkyl-Gruppe mit 1 bis 5 Kohlenstoffatomen ist; wobei der erste Flüssigkristallstoff in einer Menge von 30 Gew.-% bis 51 Gew.−% vermischt ist, der zweite Flüssigkristallstoff in einer Menge von 20 bis 40 Gew.-% vermischt ist, die im dritten Flüssigkristallstoff enthaltene Komponente der allgemeinen Formel (VII) in einer Menge von 15 bis 30 Gew.-% auf der Grundlage der Gesamtmenge der Zusammensetzung vermischt ist und die im dritten Flüssigkristallstoff enthaltenen Komponenten der allgemeinen Formeln (VIII), (IX) und (X) in einer Gesamtmenge von 4 bis 17 Gew.-% auf der Grundlage der Gesamtmenge der Zusammensetzung vermischt sind.

2. Zusammensetzung nach Anspruch 1,
dadurch gekennzeichnet, daß der erste Flüssigkristallstoff durch die allgemeinen Formeln (I) und (II) repräsentierte Komponenten enthält, der zweite Flüssigkristallstoff durch allgemeine Formeln (IV) und (VI) repräsentierte Komponenten enthält und der dritte Flüssigkristallstoff durch allgemeine Formeln (VII) und (VIII) repräsentierte Komponenten enthält.

3. Zusammensetzung nach Anspruch 1,
dadurch gekennzeichnet, daß der erste Flüssigkristallstoff durch die allgemeinen Formeln (I) und (II) repräsentierte Komponenten enthält, der zweite Flüssigkristallstoff eine durch die allgemeine Formel (IV) repräsentierte Komponente enthält und der dritte Flussigkristallstoff von den allgemeinen Formeln (VII) und (VIII) repräsentierte Komponenten enthält.

4. Zusammensetzung nach Anspruch 3,
dadurch gekennzeichnet, daß die Zusammensetzung bis zu 25 Gew.-% der Komponente der allgemeinen Formel (I), bis zu 26 Gew.-% der Komponente der Formel (II), bis zu 20 Gew.-% der Komponente der allgemeinen Formel (IV), bis zu 30 Gew.-% der Komponente der allgemeinen Formel (VII) und bis zu 5 Gew.-% der Komponente der allgemeinen Formel (VIII) enthält.

5. Komposition nach Anspruch 1,
dadurch gekennzeichnet, daß die Zusammensetzung bis zu 25 Gew.-% einer von der allgemeinen Formel (I) repräsentierten Flüssigkristallkomponente, bis zu 26 Gew.-% einer von der allgemeinen Formel (II) repräsentierten Komponente, bis zu 5 Gew.-% einer von der allgemeinen Formel (III) repräsentierten Komponente, bis zu 20 Gew.-% einer von der allgemeinen Formel (IV) repräsentierten Komponente, bis zu 5 Gew.-% einer von der allgemeinen Formel (V) repräsentierten Komponente, bis zu 28 Gew.-% einer von der allgemeinen Formel (VI) repräsentierten Komponente, bis zu 30 Gew.-% einer von der allgemeinen Formel (VII) repräsentierten Komponente, bis zu 5 Gew.-% einer von der allgemeinen Formel (VIII) repräsentierten Komponente, bis zu 5 Gew.-% einer von der allgemeinen Formel (IX) repräsentierten Komponente und bis zu 12 Gew.-% einer von der allgemeinen Formel (X) repräsentierten Komponente enthält.